Europäisches Patentamt

European Patent Office

Office européen des brevets

(11) Publication number: **0 356 204**
**A2**

## (12) EUROPEAN PATENT APPLICATION

(21) Application number: **89308507.6**

(22) Date of filing: **22.08.89**

(51) Int. Cl.⁵: **G 02 C 7/02**

(30) Priority: **22.08.88 GB 8819867**

(43) Date of publication of application:
**28.02.90 Bulletin 90/09**

(84) Designated Contracting States:
**AT BE CH DE ES FR GB GR IT LI LU NL SE**

(71) Applicant: **J. & S. WYLDE LIMITED**
**Cerium Technology Park Appledore Road**
**Tenterden Kent, TN30 7DE (GB)**

(72) Inventor: **Wylde, Stephen Jack**
**22 Bath Road**
**Emsworth Hampshire, PO10 7EP (GB)**

(74) Representative: **Crouch, David John et al**
**Bromhead & Co. 19 Buckingham Street**
**London WC2N 6EF (GB)**

(54) **Laminated lens.**

(57) A laminated lens comprising two plastics components (10 and 12) having respective mutually conforming surfaces (16 and 18) which are bonded together by means of a bonding agent (21). The said mutually conforming surfaces (10 and 12) are both spherical. One of the components (10) is thinner, at the optical axis of the lens, than the other, and that one of the said mutually conforming surfaces (16) which belongs to the thinner of the two components (10) has an optically rough finish. The bonding agent (21) has the same or substantially the same refractive index as the material of the thinner component (10).

FIG 1

EP 0 356 204 A2

Bundesdruckerei Berlin

**Description**

**Laminated Lens**

The present invention relates to a laminated lens comprising at least two components having respective mutually conforming surfaces which are bonded together by means of a bonding agent.

One such lens, and the manner in which it is made, is described in US-A-3,877,798.

The advantage in making laminated lenses is the greater number of prescriptions that can be made up from ready made spectacles components. For example, one of the lens components of a laminated lens can be selected from any one of a number of components having different spherical powers, and the other component can be selected from any one of a number of components having different toric lens powers. It will thus be appreciated that the total number of possible combinations for such a laminated lens is much greater than the total number of different components stocked. This enables a much greater percentage of prescriptions to be prepared readily from a stock of lens components.

Such a system provides a further advantage that mass-production of the individual lens components is made worthwhile, because of the greater number of components of any one specification that are required in meeting prescription demands. This makes the moulding of lens components in CR39 plastics material between glass moulds, which is already advantageous because it avoids the need for machining, lapping or polishing, even more advantageous because of the ease with which the same glass moulds can be used to mass-produce lens components.

A disadvantage in moulding lens components for use in making laminated ·lenses is the limitation which successful moulding methods impose on the thickness of the component. If the component is moulded too thin, the plastics material is distorted as it cools, owing to uneven cooling, so that the component is rendered useless. On the other hand, if the lens component is moulded sufficiently thick to overcome this problem, the resulting laminated lens has an overall thickness which gives the finished product an undesirable appearance.

The present invention seeks to provide a remedy.

Accordingly, the present invention is directed to a laminated lens having the features set out in the opening paragraph of the present specification, in which the said mutually conforming surfaces are both surfaces of revolution, in which at least one of the said at least two components is made of a synthetic plastics material, in which the said at least one of the components is thinner, at the optical axis of the lens, than the other, in which at least that one of the said mutually conforming surfaces which belongs to the thinner of the two components has an optically rough finish and in which the bonding agent has the same or substantially the same refractive index as the material of the thinner component.

Thus the thinner of the two components can be ground from a relatively thick plastics lens blank. Such a blank suffers less at the time of its manufacture from distortion during cooling. At the same time, the preparation from it of the thinner of the lens components is quick and efficient, because further lapping or polishing of the ground surface is not required.

Because the bonding agent has the same refractive index as the or each component with the rough ground surface, when the bonding agent fills the minute indentations in the rough ground surface it is as if, optically, there is no boundary between the bonding agent and the lens component material: they effectively become one.

It is possible for both the said respective mutually conforming surfaces to have an optically rough finish, although it is usually a component which is thinner at its centre than around its edges which advantageously has an optically rough finish, because it is such a component which particularly needs to be moulded with a relatively large thickness to overcome distortion problems on cooling. This component can therefore be machined on its concave side so that the resulting lens component is relatively thin.

The mutually comforming surfaces are both surfaces of revolution so that they match one another when brought together irrespective of the relative orientation of the two components. This enables the axis of astigmatism, for example, of one of the components to be rotated relative to the other, which may for example be provided with a reading addition so that the resulting lens is bifocal. Preferably, the mutually conforming surfaces are both spherical.

The present invention extends to a method of making a laminated lens comprising preparing first and second lens components so that they have respective mutually conforming surfaces, in which those mutually conforming surfaces are both surfaces of revolution, in which at least one of the said components is made of a synthetic plastics material the conforming surface of which is prepared by grinding so that that one of the components is thinner, at its optical axis than the other of the components, and in which that ground surface, in its optically rough state, is bonded to the other of the mutually conforming surfaces by means of a bonding agent which has the same or substantially the same refractive index as the material of the thinner component.

Examples of laminated lenses made in accordance with the present invention, and a method of making one, are illustrated with reference to the accompanying drawings, in which:

Figure 1 is an axial sectional view of a laminated lens made in accordance with the present invention;

Figure 2 shows an axial section through a modified lens made in accordance with the present invention;

Figure 3 is an axial section through a moulded lens component blank;

Figure 4 shows an axial sectional view of a lens component made from the blank shown in Figure 3;

Figure 5 shows an axial sectional view of the component shown in Figure 4 together with a reading element fixed thereto; and

Figure 6 shownss an axial sectional view of the component shown in Figure 5, rotated through 90° into a horizontal position, together with a second lens component and other parts involved in the bringing together of the two components to make the finished product shown in Figure 1.

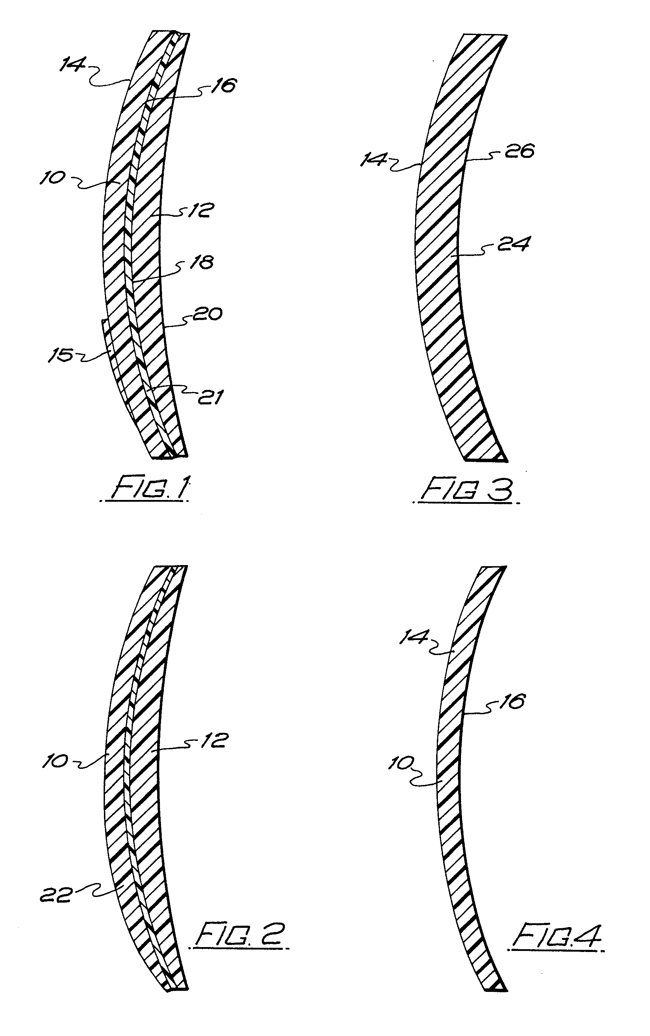

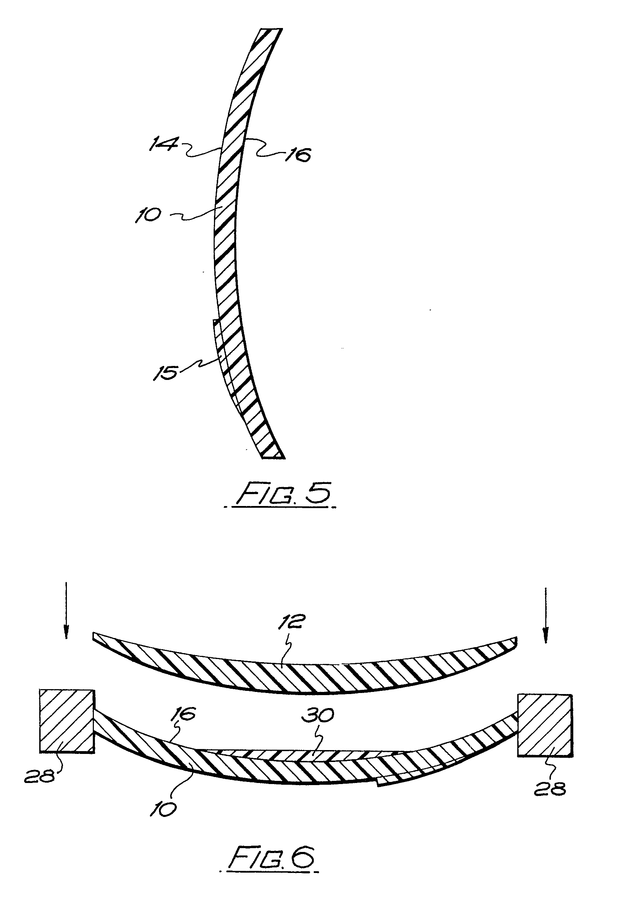

The laminated lens shown in Figure 1 comprises a CR39 plastics front lens component 10, and a moulded CR39 plastics rear lens component 12. The front lens component 10 has a front convex surface 14 to a lower part of which is fixed a bifocal or reading element 15, and a rear spherical concave surface 16. The concave surface 16 is optically rough as a result of its having been prepared by grinding or other machining without any subsequent lapping or polishing, the component 10 having been ground in this manner from a relatively thick lens blank.

The rear component 12 has a forward spherical convex surface 18 which has precisely the same radius of curvature as the concave surface 16 of the front lens component 10, and a rear concave surface 20.

The rear surface 16 of the front lens component 10 is bonded to the front convex surface 18 of the rear lens component 12 by means of Loctite Engineering 357 ultraviolet curing adhesive 21. The latter is selected so that its refractive index is the same or substantially the same as that of the CR39 plastics. Alternatively, the CR39 plastics material is selected so that its refractive index is substantially the same as the said adhesive.

In the modified laminated lens shown in Figure 2, the front lens component 10 tapers at a lower region 22 thereof so that the result is a varifocal lens component instead of a bifocal lens component as shown in Figure 1.

Figures 3 to 6 show successive stages in the manufacture of the laminated lens shown in Figure 1. Thus Figure 3 shows a relatively thick moulded CR39 plastics front lens component blank 24 having a finished front convex surface 14 and a rear concave surface 26. The lens component blank is moulded in this way between glass moulds in a manner kown per se so that the front surface 14 is optically smooth when the plastics component is removed from the mould. At the same time, the blank is of sufficient thickness to ensure that it does not distort upon cooling from the mould. The lens blank component shown in Figure 3 then has its rear concave surface machined by grinding until the blank has a thickness in its central area, being that for distant viewing, of substantially 0.50mm to 1.00mm. Although, for the sake of clarity, the lens component shown in Figure 4 has a substantially uniform thickness, it would normally have a different thickness at its central region from that around its edges. The resulting lens component shown in Figure 4 is thereby provided with a rear spherical optically rough concave surface 16. The bifocal or reading element 15 is then fixed to the front surface of the lens component by means of adhesive as shown in Figure 5. The finished lens component is duly marked to locate the prescribed optical centre point thereof. It is then rotated into a horizontal position with its concave surface 16 uppermost as shown in Figure 6 and is held in this position by a jig indicated diagrammatically at 28, having a protractor scale for axis location. Loctite Engineering 357 ultraviolet curing adhesive 30 is then placed on to the concave surface 16 of the component 10 and the rear lens component 12 is brought into position above the front lens component 10. The rear lens component at this stage has been marked to indicate its optical centre and also its axis of ovality. The optical centres of the two lens components are brought into registration with one-another, and the axis of ovality of the rear lens component is positioned according to the desired prescription. The rear lens component 12 is pressed downwardly against the front lens component lo so that the adhesive 30 is squeezed uniformly between the two components, and all air between them is ejected. This is performed in the presence of low intensity ultra violet light. After alignment and centration, the intensity of the ultra-violet light is increased to a high level to complete the curing process within a matter of minutes.

It will be appreciated that once the lens has been laminated in this way, its edges may be cut to give the lens its desired shape looking at it in the direction of viewing.

Many different variations and modifications to the illustrated lens and lens manufacture will readily occur to the skilled reader without taking the result outside the scope of the present invention. To give one example only, the rear lens component could be made thinner at its centre than at its edges, so that it would be the component which preferably has an optically rough surface which is bonded to the corresponding surface of the front lens component. Both the bonded surfaces may of course be optically rough. A bifocal or reading element, such as the one labelled 15 in the drawings, may be the thinner component, and a further lens component such as the one labelled 10 in the drawings could be the other component, in a further embodiment of the present invention. Such an embodiment may be made with or without a rear lens component, such as the one labelled 12 in the drawings.

## Claims

1. A laminated lens comprising at least two components (10 and 12) having respective mutually conforming surfaces (16 and 18) which are bonded together by means of a bonding agent (21), characterised in that the said mutually conforming surfaces (10 and 12) are both surfaces of revolution, in that at least one of the said at least two components (10) is made of a synthetic plastics material, in that the said at least one of the components (10) is thinner, at the optical axis of the lens, than the other, in that at least that one of the said mutually conforming surfaces (16) which belongs to the thinner of the two components (10) has an optically rough finish, and in that the bonding agent (21) has the same or substantially the same refractive index as the material of the thinner component (10).

2. A laminated lens according to claim 1, characterised in that both of the said at least two components (10 and 12) are made of a synthetic plastics material.

3. A laminated lens according to claim 1 or claim 2, characterised in that both of the said mutually conforming surfaces (16 and 18) have an optically rough finish.

4. A laminated lens according to any preceding claim, charaterised in that the thinner component (10) is thinner at its centre than around its edges.

5. A laminated lens according to any preceding claim, characterised in that the conforming surface (16) of the thinner component (10) is concave.

6. A laminated lens according to any preceding claim characterised in that the mutually conforming surfaces (16 and 18) are both spherical.

7. A method of making a laminated lens characterised by (a) preparing first and second lens components (10 and 12) so that they have respective mutually conforming surfaces (16 and 18), in which those mutually conforming surfaces (16 and 18) are both surfaces of revolution, (b) having at least one of the said components (10) made of a synthetic plastics material the conforming surface (16) of which is prepared by grinding so that that one of the components (10) is thinner, at its optical axis than the other of the components (12), and by (c) bonding that ground surface (16), in its optically rough state, to the other of the mutually conforming surfaces (18) by means of a bonding agent (21) which has the same or substantially the same refractive index as the material of the thinner component.

8. A method of making a laminated lens as claimed in any one of claims 2 to 6, in accordance with claim 7.

_FIG.1_

_FIG.2_

_FIG.3_

_FIG.4_

_Fig. 5_

_Fig. 6_